# FASCICULE DE BREVET EUROPEEN

(11) **EP 1 463 892 B1**
(45) Date de publication et mention de la délivrance du brevet: **30.07.2008**
(21) Numéro de dépôt: 02799132.2
(22) Date de dépôt: 30.12.2002
(51) Int. Cl.: F16D 65/097

(54) **GARNITURE DE FREIN AVEC COUCHE D'AMORTISSEMENT**
BREMSBELAG MIT SCHWINGUNGSDÄMPFUNGSCHICHT
BRAKE LINING WITH DAMPING LAYER

(30) Priorité: 31.12.2001 FR 0117110
(43) Date de publication de la demande: 06.10.2004
(73) Titulaire: ROBERT BOSCH GMBH, 70442 Stuttgart (DE)
(72) Inventeur: HURWIC, Aleksander, F-75020 Paris (FR)
(74) Mandataire: Hurwic, Aleksander Wiktor
(86) Numéro de dépôt international: PCT/FR2002/004593
(87) Numéro de publication internationale: WO 2003/060342

(56) Documents cités:
- DE-A- 3 900 742
- FR-A- 2 709 522
- US-A- 4 147 241
- PATENT ABSTRACTS OF JAPAN vol. 1998, no. 06, 30 avril 1998 (1998-04-30) & JP 10 037990 A (NISSHINBO IND INC), 13 février 1998 (1998-02-13)
- PATENT ABSTRACTS OF JAPAN vol. 008, no. 047 (M-280), 2 mars 1984 (1984-03-02) -& JP 58 200825 A (AKEBONO BRAKE KOGYO KK), 22 novembre 1983 (1983-11-22)

## Description

La présente invention concerne les dispositifs de freinage, en particulier pour véhicule automobile, comprenant des plaquettes en matériau de friction destinées à être serrées sur des organes mobiles, tels que des disques de frein solidaires des roues du véhicule.

Dans les freins à disque du type à étrier flottant, chaque disque s'étend entre deux plaquettes de frein qui sont fixées sur des supports métalliques et qui sont serrées sur le disque au moyen d'un mécanisme à vérin hydraulique, comprenant un piston qui agit sur une des plaquettes et un étrier de renvoi qui agit sur l'autre plaquette.

Le freinage peut provoquer un bruit plus ou moins important, dû au frottement des plaquettes sur le disque et aux vibrations du disque sous l'effet de ce frottement. JP-A-10037990 **décrit un dispositif de freinage comportant une toile sur le support de garniture.**

L'invention a notamment pour but d'apporter une solution au moins partielle à ce problème.

Elle propose à cet effet un dispositif de freinage, comprenant au moins une plaquette en matériau de friction destinée à être appliquée par un organe de commande sur un élément mobile tel par exemple qu'un disque de frein d'une roue de véhicule automobile, caractérisé en ce qu'il comprend également un amortisseur en fil métallique entremêlé, entrelacé et/ou tricoté, interposé entre la plaquette et l'organe de commande.

Cet amortisseur métallique, qui est constitué par un bloc de fil d'acier inoxydable entrelacé ou tricoté et comprimé à la presse, permet d'absorber les modes de vibrations propres du disque de frein et réduit donc sensiblement les bruits de freinage.

Les amortisseurs métalliques de ce type présentent un grand nombre d'avantage, comme d'être à peu près insensibles à la corrosion et aux variations de température (ils supportent des températures de -70 à +300°C sans modification de leurs caractéristiques), ils ont une fréquence de résonance basse, ce qui permet d'atténuer très fortement les modes de vibration du disque de frein, et ils supportent des charges statiques et dynamiques relativement élevées ou très élevées, ce qui leur assure une longue durée de vie même en cas de freinages intenses et répétés.

Dans une première forme de réalisation de l'invention, l'amortisseur métallique est placé entre la plaquette de frein et une pièce de support de cette plaquette.

Dans ce cas, l'organe de commande, tel qu'un piston ou un étrier de renvoi, agit sur la pièce de support et les vibrations du disque sont absorbées par l'amortisseur métallique disposé entre la plaquette et la pièce de support.

Dans une autre forme de réalisation de l'invention, l'amortisseur métallique se trouve entre la pièce de support de la plaquette et l'organe de commande.

Dans ce cas, il peut être solidaire de la pièce de support ou bien monté en partie dans un logement formé dans la pièce de support ou dans l'organe de commande.

Dans encore une autre forme de réalisation de l'invention, cet amortisseur métallique peut servir de pièce de support de la plaquette de frein.

De façon générale, l'invention permet de réduire de façon sensible les bruits de freinage dus aux modes de vibration du disque de frein et cela de façon simple, efficace et économique.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique partielle en coupe d'un dispositif de freinage selon l'invention ;
- les figures 2 à 5 représentent schématiquement des variantes de réalisation de l'invention.

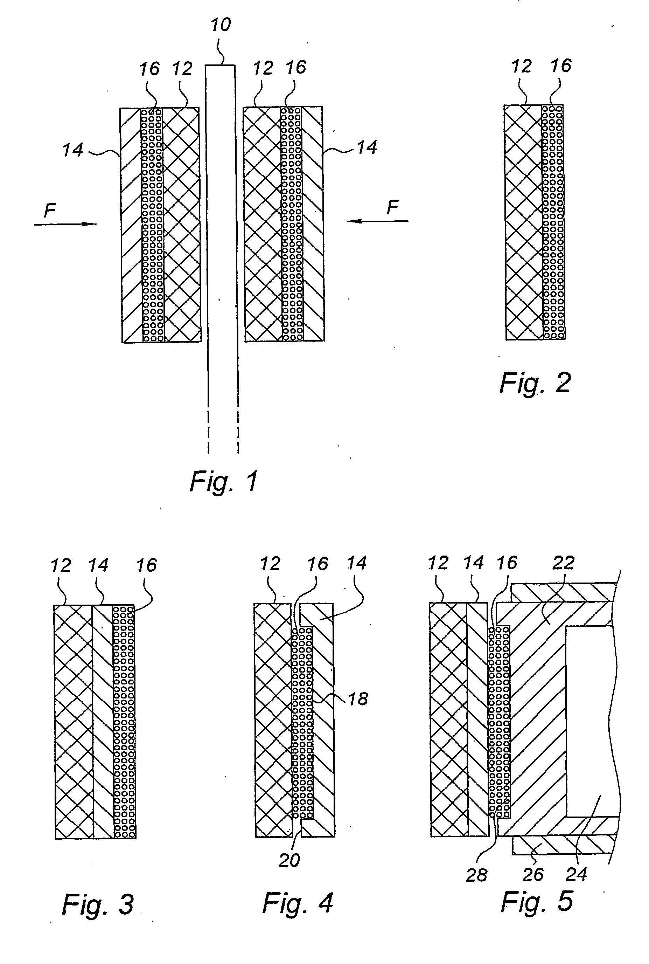

En figure 1, la référence 10 désigne un disque de frein, qui est solidaire d'une roue de véhicule (non représentée) et qui s'étend entre des plaquettes de frein 12 qui sont axialement alignées et situées de part et d'autre du disque 10, ces plaquettes 12 étant montées dans un mécanisme de freinage (non représenté) bien connu de l'homme du métier et étant serrées sur le disque 10 pour ralentir ou arrêter sa rotation lorsqu'elles sont soumises à des efforts F générés dans le mécanisme par un fluide hydraulique sous pression.
Selon l'invention, les plaquettes de frein 12, réalisées en un matériau de friction d'un type classique, sont montées sur des pièces de support 14, par exemple métalliques, par l'intermédiaire d'un amortisseur métallique 16 formé d'un fil métallique, de préférence en acier inoxydable, qui est entremêlé, entrelacé ou tricoté et qui est comprimé à la presse. Ce fil présente une grande surface de contact assurant des amortissements par frottement quand l'amortisseur 16 est déformé, notamment par des vibrations générées au freinage.
Les amortisseurs métalliques de ce type peuvent supporter des charges statiques et dynamiques élevées pour un encombrement faible et ont des fréquences de résonance relativement basses, comprises entre 15 et 25 Hz en fonction de leurs dimensions et de leur nature. Par exemple, un amortisseur 16 ayant une épaisseur de 15 à 20 mm, peut supporter une charge statique de 50 à 300 daN et une charge dynamique de l'ordre de 1000 daN par exemple, sa fréquence propre étant comprise entre 15 et 20 Hz.
Ces amortisseurs métalliques réalisés en fil d'acier inoxydable ont une excellente résistance aux huiles, aux graisses, aux solvants, à l'eau, à la poussière et aux agents chimiques. Leur tenue en température couvre une gamme de -70 à + 300°C, leur comportement au vieillissement est excellent et ils sont capables d'atténuer très fortement les fréquences supérieures à leur fréquence propre. Leur limite élastique en compression est 3 à 4 fois supérieure à la charge statique maximale indiquée ci-dessus.

Dans la variante de réalisation de la figure 2, la plaquette de frein 12 est fixée directement sur l'amortisseur métallique 16 qui remplace alors la pièce de support 14.

Dans la variante de réalisation de la figure 3, la plaquette de frein 12 est fixée de façon classique sur la pièce de support 14 et l'amortisseur métallique 16 est fixé également sur la pièce de support 14, à l'opposé de la plaquette de frein 12.

Dans la variante de réalisation de la figure 4, l'amortisseur métallique 16 se trouve entre la plaquette de frein 12 et la pièce support 14 et est partiellement logé, au repos, dans un logement 18 formé en creux dans la pièce support 14, du côté de la plaquette de frein 12. Ainsi, en cas de freinage normal ou relativement peu intense, l'effort de freinage est transmis de la pièce support 14 à la plaquette de frein 12 par l'amortisseur métallique 16 qui absorbe les vibrations du disque de frein. En cas de freinage intense, l'amortisseur métallique 16 est comprimé et le rebord 20 de la pièce support 14, qui délimite le logement 18, vient directement en appui sur la garniture de frein 12 pour la transmission de l'effort de freinage.
En variante, des doigts ou des picots peuvent être formés en saillie sur le fond du logement 18, pour venir s'appliquer sur la plaquette de frein 12 comme le rebord 20 en cas de freinage intense. Cela évite une déformation permanente de l'amortisseur 16.

Dans la variante de réalisation de la figure 5, la plaquette de frein 12 est montée de façon classique sur la pièce support 14 et l'amortisseur métallique 16 est interposé entre la pièce support 14 et un organe de serrage qui est ici un piston 22 délimitant une chambre de travail 24 dans un cylindre 26.
Comme dans la variante de réalisation de la figure 4, l'amortisseur métallique 16 est logé en partie, au repos, dans un logement 28 de l'extrémité du piston 22 qui est tournée vers la plaquette de frein 12 et la pièce support 14, et s'étend en partie à l'extérieur de ce logement vers la pièce 14.

Le fonctionnement du dispositif selon l'invention découle à l'évidence de ce qui précède : en cas de freinage normal ou peu intense, les plaquettes de frein 12 sont serrées sur le disque 10 et les amortisseurs métalliques 16 sont alors comprimés de façon élastique dans une direction parallèle à l'axe de rotation. Dans cet état, ils conservent une capacité de déformation élastique et sont capables d'absorber ou d'atténuer très fortement les vibrations qui sont supérieures à leur fréquence propre, c'est-à-dire des vibrations dont la fréquence est supérieure à 25-30 Hz.
En cas de freinage intense, les amortisseurs métalliques 16 des figures 1 à 3 conservent une capacité d'absorption des vibrations. Ceux des figures 4 et 5 n'ont plus d'effet d'absorption des vibrations lorsqu'ils sont suffisamment comprimés pour être entièrement contenus dans les logements 18, 28 précités.

Bien entendu, l'invention s'applique à tous les dispositifs de freinage utilisant des plaquettes ou des garnitures de friction serrées ou appliquées sur un élément mobile et n'est pas limitée aux dispositifs de freinage pour véhicules automobiles.

## Revendications

1. Dispositif de freinage, comprenant au moins une plaquette (12) en matériau de friction destinée à être appliquée par un organe de commande (22) sur un élément mobile (10), tel par exemple qu'un disque de frein d'une roue de véhicule automobile, **caractérisé en ce qu'**il comprend également un amortisseur (16) en fil métallique entremêlé, entrelacé et/ou tricoté, interposé entre la plaquette (12) et l'organe de commande (22) **et en ce que l'amortisseur métallique (16) est un bloc de fil d'acier inoxydable entremêlé, entrelacé ou tricoté et comprimé à la presse.**

2. Dispositif selon la revendication **1,**
**caractérisé en ce que** l'amortisseur métallique (16) est entre la plaquette (12) et une pièce (14) de support de cette plaquette.

3. Dispositif selon la revendication **2,**
**caractérisé en ce qu'**au repos, l'amortisseur métallique (16) est en partie monté dans un logement (18) de la pièce support (14) et en partie en saillie sur cette pièce du côté de la plaquette (12).

4. Dispositif selon la revendication **3,**
**caractérisé en ce que** le logement (18) est délimité par un rebord périphérique (20) et/ou comprend des doigts en saillie sur le fond du logement (18).

5. Dispositif selon la revendication **1,**
**caractérisé en ce que** l'amortisseur métallique (16) est entre une pièce (14) de support de la plaquette (12) et l'organe de commande (22).

6. Dispositif selon la revendication **5,**
**caractérisé en ce qu'**au repos, l'amortisseur métallique (16) est monté en partie dans un logement (28) de la pièce de support (14) ou de l'organe de commande (22) et en partie en saillie à l'extérieur de ce logement.

7. Dispositif selon la revendication **1,**
**caractérisé en ce que** l'amortisseur métallique (16) est entre la plaquette (12) et l'organe de commande (22) et forme une pièce de support de la plaquette.

8. Dispositif selon l'une des revendications précédentes, **caractérisé en ce qu'**au freinage, l'amortisseur (16) est soumis à une déformation élastique.

## Claims

1. A brake device comprising at least one pad (12) made of a friction material and serving to be pressed by a control member (22) against a moving element (10) such as, for example, a brake disk on a motor vehicle wheel, said brake device being **characterized in that** it further comprises a damper (16) made of a tangled, intertwined and/or knitted metal wire interposed between the pad (12) and the control member (22)and **in that** the metal damper (16) is a block of tangled, intertwined, or knitted stainless steel wire that is compressed in a press.

2. A device according to claim 1, **characterized in that** the metal damper (16) is disposed between the pad (12) and a support piece (14) for supporting said pad.

3. A device according to claim 2, **characterized in that,** at rest, the metal damper (16) is mounted in part inside a recess (18) in the support piece (14) and in part projecting from said piece on the same side as the pad (12).

4. A device according to claim 3, **characterized in that** the recess (18) is defined by a peripheral rim (20) and/or it is provided with fingers projecting from the bottom of the recess (18).

5. A device according to claim 1, **characterized in that** the metal damper (16) is disposed between the control member (22) and a support piece (14) for supporting the pad (12).

6. A device according to claim 5, **characterized in that,** at rest, the metal damper (16) is mounted in part inside a recess (28) in the support piece (14) or in the control member (22) and in part projecting from said recess.

7. A device according to claim 1, **characterized in that** the metal damper (16) is disposed between the pad (12) and the control member (22), and it forms a support piece for supporting the pad.

8. A device according to any preceding claim, **characterized in that** during braking the damper (16) undergoes elastic deformation.

## Patentansprüche

1. Bremsvorrichtung mit mindestens einem Bremsbelag (12) aus einem Reibmaterial, der dazu bestimmt ist, von einem Steuerorgan (22) gegen ein bewegliches Element (10), beispielsweise eine Bremsscheibe eines Kraftfahrzeugrads, angelegt zu werden, **dadurch gekennzeichnet, dass** sie auch einen Dämpfer (16) aus durchwirktem, verwebtem und/oder gestricktem Draht aufweist, der zwischen dem Bremsbelag (12) und dem Steuerorgan (22) eingesetzt ist, und dass der Metalldämpfer (16) ein Block aus nicht rostendem Stahldraht ist, der durchwirkt, verwebt oder gestrickt und zusammengepreßt ist.

2. Vorrichtung nach Anspruch 1, **dadurch gekennzeichnet, dass** der Metalldämpfer (16) zwischen dem Bremsbelag (12) und einem Teil (14) zum Tragen dieses Bremsbelags (12) liegt.

3. Vorrichtung nach Anspruch 2, **dadurch gekennzeichnet, dass** in der Ruhestellung der Metalldämpfer (16) zum Teil in einer Aufnahme (18) des Trägerteils (14) angebracht ist und zum Teil auf der Seite des Bremsbelags (12) an diesem Teil hervorsteht.

4. Vorrichtung nach Anspruch 3, **dadurch gekennzeichnet, dass** die Aufnahme (18) durch einen umlaufenden Rand (20) begrenzt ist und/oder am Boden der Aufnahme (18) hervorstehende Finger aufweist.

5. Vorrichtung nach Anspruch 1, **dadurch gekennzeichnet, dass** der Metalldämpfer (16) zwischen einem Teil zum Tragen des Bremsbelags (12) und dem Steuerorgan (22) liegt.

6. Vorrichtung nach Anspruch 5, **dadurch gekennzeichnet, dass** in der Ruhestellung der Metalldämpfer (16) zum Teil in einer Aufnahme (28) des Trägerteils (14) oder des Steuerorgans (22) angebracht ist und zum Teil außerhalb dieser Aufnahme hervorsteht.

7. Vorrichtung nach Anspruch 1, **dadurch gekennzeichnet, dass** der Metalldämpfer (16) zwischen dem Bremsbelag (12) und dem Steuerorgan (22) liegt und einen Teil zum Tragen des Bremsbelags bildet.

8. Vorrichtung nach einem der vorhergehenden Ansprüche, **dadurch gekennzeichnet, dass** beim Bremsen der Dämpfer (16) einer elastischen Verformung unterworfen ist.
